# EUROPEAN PATENT APPLICATION

(11) **EP 4 852 423 A1**
(43) Date of publication of application: **09.12.2026**
(21) Application number: 24921683.9
(22) Date of filing: 02.12.2024
(51) Int. Cl.: H04N 19/117

(54) **VIDEO PROCESSING METHODS, AND DEVICE AND STORAGE MEDIUM**

(30) Priority: 04.02.2024 CN 202410158740
(71) Applicant: ZTE Corporation, Shenzhen, Guangdong 518057 (CN)
(72) Inventor: BAI, Yaxian, Shenzhen, Guangdong 518057 (CN); WU, Ping, Shenzhen, Guangdong 518057 (CN); GAO, Ying, Shenzhen, Guangdong 518057 (CN); XIE, Shaowei, Shenzhen, Guangdong 518057 (CN); JIA, Menghu, Shenzhen, Guangdong 518057 (CN); HUANG, Cheng, Shenzhen, Guangdong 518057 (CN)
(74) Representative: Aipex B.V.
(86) International application number: PCT/CN2024/136175
(87) International publication number: WO 2025/161661

(57) **Abstract**

Provided are video processing methods, a device, and a storage medium. A video processing method applied to a decoding end includes: filtering a luma component of a reconstructed picture to obtain a corresponding reconstructed luma-component value; determining a luma-component filtering mode and a luma-component filtering parameter according to video bitstream parameter information; filtering the reconstructed luma-component values using the luma-component filtering mode and the luma-component filtering parameter to obtain a corresponding first chroma-component sample correction value and a corresponding second chroma-component sample correction value; and superimposing the first chroma-component sample correction value with a first reconstructed chroma-component value to obtain a corrected first reconstructed chroma-component value, and superimposing the second chroma-component sample correction value with a second reconstructed chroma-component value to obtain a corrected second reconstructed chroma-component value.

## Description

### TECHNICAL FIELD

The present application relates to the field of video processing technologies and, in particular, to video processing methods, a device, and a storage medium.

### BACKGROUND

As video coding technologies based on hybrid coding frameworks continue to evolve, the processing flow of an adaptive loop filter (ALF) module has become increasingly sophisticated, particularly with respect to the filtering processing flow of a luma component. To enhance the reconstruction performance of the adaptive loop filter module, one or more fixed filters may be introduced into the ALF module. The output of the one or more fixed filters is used to supplement input signals of the ALF module, and after Wiener filtering, the filtering performance of the ALF module can be further improved. However, a cross-component adaptive loop filter (CC-ALF) module still uses the output value of a luma component after being processed by a sample adaptive offset (SAO) module as an input signal, without fully utilizing the rich luma information available from the adaptive loop filter module. Consequently, the input signals of the CC-ALF module are relatively limited, resulting in a relatively large deviation between a reconstructed chroma-component value corrected and processed by CC-ALF and an original value, and thereby leaving room for further improvement in picture reconstruction quality.

### SUMMARY

In view of the above, embodiments of the present application provide video processing methods, a device, and a storage medium, which can effectively improve the reconstruction quality of a chroma component in a video picture.

An embodiment of the present application provides a video processing method. The video processing method is applied to a decoding end and includes the following.

A luma component of a reconstructed picture is filtered to obtain a corresponding reconstructed luma-component value.

A luma-component filtering mode and a luma-component filtering parameter are determined according to video bitstream parameter information.

The reconstructed luma-component value is filtered by using the luma-component filtering mode and the luma-component filtering parameter to obtain a corresponding first chroma-component sample correction value and a corresponding second chroma-component sample correction value.

The first chroma-component sample correction value is superimposed with a first reconstructed chroma-component value to obtain a corrected first reconstructed chroma-component value, and the second chroma-component sample correction value is superimposed with a second reconstructed chroma-component value to obtain a corrected second reconstructed chroma-component value.

An embodiment of the present application provides a video processing method. The video processing method is applied to an encoding end and includes the following.

A luma component of a reconstructed picture is filtered to obtain a corresponding reconstructed luma-component value.

The reconstructed luma-component value is filtered to obtain a corresponding first chroma-component sample correction value and a corresponding second chroma-component sample correction value.

The first chroma-component sample correction value is superimposed with a first reconstructed chroma-component value to obtain a corrected first reconstructed chroma-component value, and the second chroma-component sample correction value is superimposed with a second reconstructed chroma-component value to obtain a corrected second reconstructed chroma-component value.

A cross-component adaptive loop filter (CC-ALF) parameter is determined based on a principle of minimizing a minimum mean square error between a corrected reconstructed chroma-component value and an original chroma-component pixel value.

The CC-ALF parameter is written into a coded video bitstream as video bitstream parameter information, and the coded video bitstream is transmitted to a decoding end.

An embodiment of the present application provides a communication device. The communication device includes a memory and one or more processors.

The memory is configured to store one or more programs.

The one or more programs, when executed by the one or more processors, cause the one or more processors to perform the method according to any preceding embodiment.

An embodiment of the present application provides a storage medium storing a computer program which, when executed by a processor, causes the processor to perform the method according to any preceding embodiment.

### BRIEF DESCRIPTION OF DRAWINGS

FIG. 1 is a schematic diagram of an implementation of a CC-ALF structure in an H.266/Versatile Video Coding (VVC) video coding framework according to an embodiment of the present application.
FIG. 2 is a schematic flowchart of loop filtering processing in an enhanced compression model (ECM) according to the related art.
FIG. 3 is a structural diagram of a luma-component filtering module incorporating fixed filters according to the related art.
FIG. 4 is a schematic diagram of an implementation of an H.266/VVC coding framework according to the related art.
FIG. 5 is a schematic diagram of an implementation of an H.266/VVC decoding framework according to the related art.
FIG. 6 is a flowchart of a video processing method according to an embodiment of the present application.
FIG. 7 is another flowchart of a video processing method according to an embodiment of the present application.
FIG. 8 is a flowchart of a video processing method applied to a decoding end according to an embodiment of the present application.
FIG. 9 is a configuration diagram of a CC-ALF filtering structure with a single input signal according to an embodiment of the present application.
FIG. 10 is another configuration diagram of a CC-ALF filtering structure with a single input signal according to an embodiment of the present application.
FIG. 11 is a configuration diagram of a CC-ALF filtering structure with multiple input signals according to an embodiment of the present application.
FIG. 12 is a flowchart of a video processing method applied to an encoding end according to an embodiment of the present application.
FIG. 13 is a block diagram of a video processing apparatus according to an embodiment of the present application.
FIG. 14 is another block diagram of a video processing apparatus according to an embodiment of the present application.
FIG. 15 is a structural diagram of a communication device according to an embodiment of the present application.

### DETAILED DESCRIPTION

Embodiments of the present application are described hereinafter in conjunction with the drawings. The present application is described below in conjunction with embodiments and the drawings. The embodiments described below are intended to explain the present application and not to limit the scope of the present application.

For block-based hybrid coding frameworks, such as high efficiency video coding (HEVC), versatile video coding (VVC), and audio video coding standard (AVS), distortion artifacts including blocking artifacts, ringing artifacts, color distortion, and picture blurring still exist in compressed videos. Signals after transform and quantization are processed through inverse quantization, inverse transform, and prediction compensation to obtain a reconstructed picture. Compared with the original picture, the reconstructed picture differs in some information due to the effects of quantization, that is, the reconstructed picture exhibits distortion. To reduce the impact of such distortion on video quality, in-loop filtering is generally employed in the hybrid coding frameworks to effectively alleviate the distortion introduced by the quantization. Since filtered reconstructed pictures are used as a reference for subsequent coded pictures to predict future picture signals, the preceding filtering operation is also referred to as loop filtering, that is, a filtering operation performed within a coding loop.

Using the H.266/VVC video coding technologies as an example, loop filtering technologies include luma mapping with chroma scaling (LMCS), deblocking filter (DBF), sample adaptive offset (SAO), and adaptive loop filter (ALF). The LMCS improves compression efficiency by reallocating code words to information within a dynamic range. The DBF is used for reducing the blocking artifacts. The SAO is used for reducing the ringing artifacts. The ALF can reduce decoding errors.

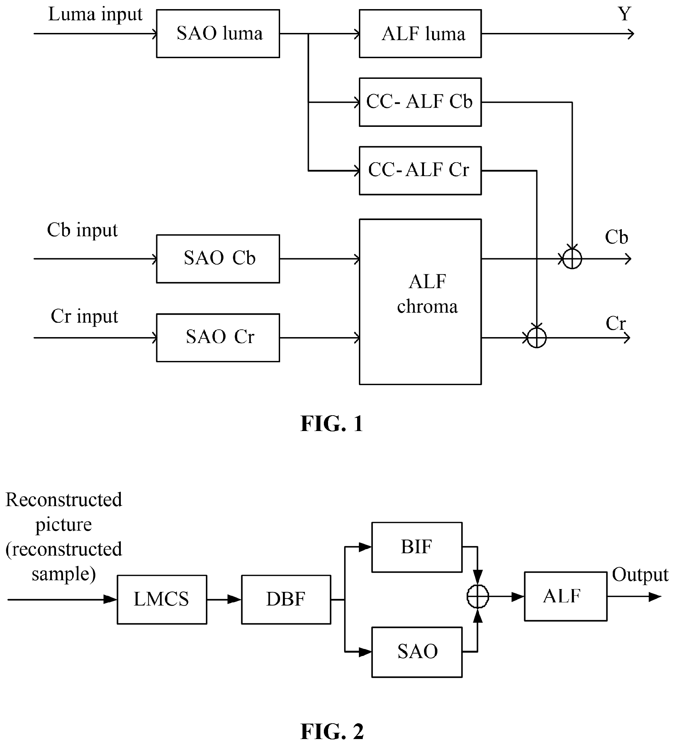

An ALF module includes a filter for a luma component, a filter for two chroma components, and a cross-component adaptive loop filter (CC-ALF). FIG. 1 is a schematic diagram of an implementation of a CC-ALF structure in an H.266/VVC video coding framework according to an embodiment of the present application. The CC-ALF refines each chroma component by utilizing a luma sample value. A combined structure of the CC-ALF and other filters is shown in FIG. 1. It can be seen that, after the luma component (that is, Luma) and the chroma components (that is, Cb and Cr) are subjected to filtering processing of the SAO, the ALF filtering processing is continuously performed. In a conventional video coding system, only a luma-component ALF and a chroma-component ALF are executed. In the embodiments of the present application, when the CC-ALF is enabled, two additional ALFs, namely CC-ALF Cb and CC-ALF Cr, are further executed to output correction sample values. The correction sample values are then superimposed by adders with a first chroma component Cb and a second chroma component Cr that have already undergone ALF processing, respectively.

On the basis of the VVC, further research and exploration have been conducted on a further enhanced compression model (ECM). In a loop filtering part of the ECM, in addition to retaining loop filters adopted in the VVC, multiple additional loop filters are also introduced, such as bilateral filtering (BIF). FIG. 2 is a schematic flowchart of loop filtering processing in an ECM according to the related art. The loop filtering process of the ECM is as shown in FIG. 2. The BIF is performed in parallel with the SAO, and correction values generated by the BIF and correction values generated by the SAO are added to reconstructed pixels that have undergone deblocking artifact filtering. Accordingly, the input to the ALF in the ECM is the reconstructed values after the processing of the BIF and the SAO, and the output from the ALF in the ECM is enhanced pixel values.

To address the problem of the single input to an ALF filtering module, multiple technical solutions have been proposed to incorporate fixed filters into the loop filtering process, and certain coding gains have been achieved.

In a solution, reconstructed picture sample values before filtering of the DBF are used as additional input signals to the ALF, and the final filtering result of the ALF is obtained by performing weighting processing on a conventional ALF filtering result and the reconstructed value before the filtering of the DBF. In another solution, in the ALF filtering module in the related art, the number of filter taps corresponding to output values of a fixed filter can be increased. Filter tap coefficients trained online include two types: spatial-domain taps and fixed-filter output value taps. In another solution, the residuals of picture pixels may be used as additional input signals to the ALF, and different filtering templates and different filtering coefficients are used for predicted reconstructed picture values and residual values, respectively. In another solution, on the basis of two fixed filters in the original ALF filtering processing of the ECM, an additional fixed filter is introduced and cascaded with the existing fixed filters, with the output of the cascaded fixed filters serving as the input to the ALF.

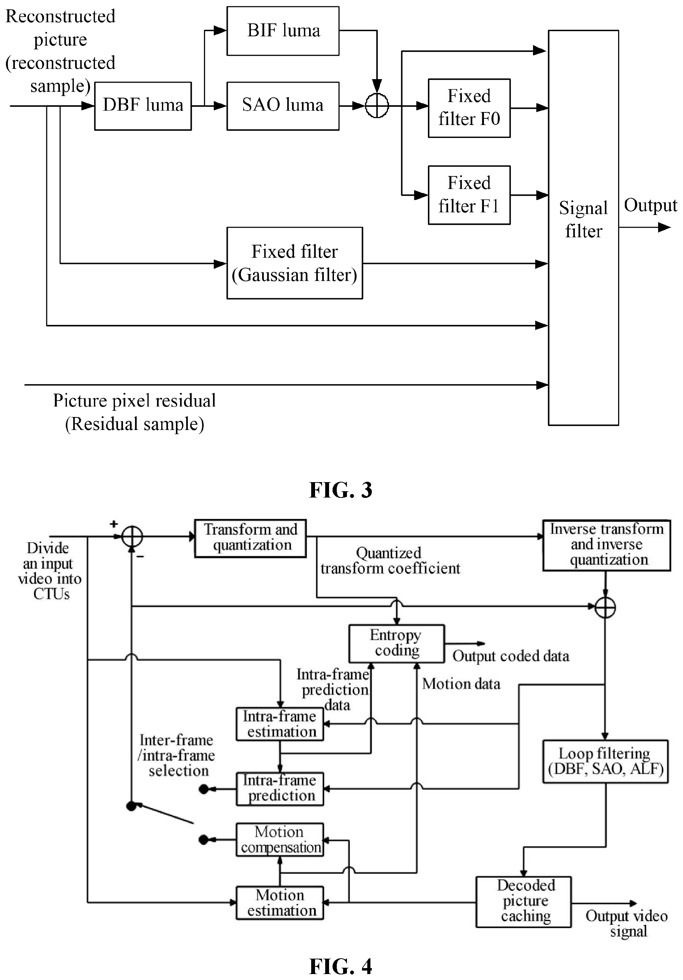

FIG. 3 is a structural diagram of a luma-component filtering module incorporating fixed filters according to the related art. After the fixed filters are introduced into the ECM, the original input to the ALF filtering module is expanded to multiple inputs. As shown in FIG. 3, in addition to the output value after filtering of the SAO (spatial neighboring pixels are used for Wiener filtering), the inputs further include the reconstructed picture value before a DBF filtering module, the picture pixel value before the DBF filtering module and after a Gaussian filter, the output value of the fixed filter, and the picture pixel residual.

Although the preceding solutions solve the problem of a single input signal of the ALF filtering module, the CC-ALF filtering module still uses an output result after the filtering of the SAO as the input signal for generating a chroma-component correction value. Consequently, a corrected reconstructed chroma-component value after CC-ALF processing still exhibits a relatively large deviation from the original value, and the picture reconstruction quality remains to be further improved. To solve this problem, the present application provides a flexible cross-component loop filtering method capable of fully utilizing luma-component information at various nodes of a luma ALF module. In particular, the method exploits the luma-component optimization provided by a fixed filter to provide compensation for details in the filtering result of the chroma component, thereby effectively improving the reconstruction quality of the chroma component.

The present application is further described in detail below in conjunction with the drawings and embodiments. The embodiments described herein are intended to explain the present application and not to limit the present application.

The embodiment of the present application is implemented based on a hybrid coding framework. FIG. 4 is a schematic diagram of an implementation of an H.266/VVC coding framework according to the related art. As shown in FIG. 4, the next-generation video coding standard H.266/VVC coding framework may include modules such as intra-frame prediction, inter-frame prediction, transform, quantization, loop filtering, and entropy coding.

An overall framework process of an encoding end is described below.
(1) An input video is divided into frames for block partitioning.
(2) The partitioned blocks are sent to an intra-frame/inter-frame prediction module to undergo predictive coding. The intra-frame prediction module is mainly configured to remove spatial correlation between pictures. The inter-frame prediction module is mainly configured to remove temporal correlation between pictures.
(3) An obtained predicted value is subtracted from the original block to obtain a residual, the residual is transformed and quantized to remove frequency domain correlation, and lossy compression is performed on the obtained data.
(4) The entropy coding is performed on all coding parameters and residuals to form a binary stream for storage or transmission. Output data of an entropy coding module is a compressed bitstream of the original video.
(5) The predicted value is added to the residual subjected to inverse quantization and inverse transform to obtain a block reconstructed value, and a reconstructed picture is finally formed.
(6) The reconstructed picture is subjected to a filtering operation through a loop filter and stored in a picture buffer to be used as a reference picture in the future.

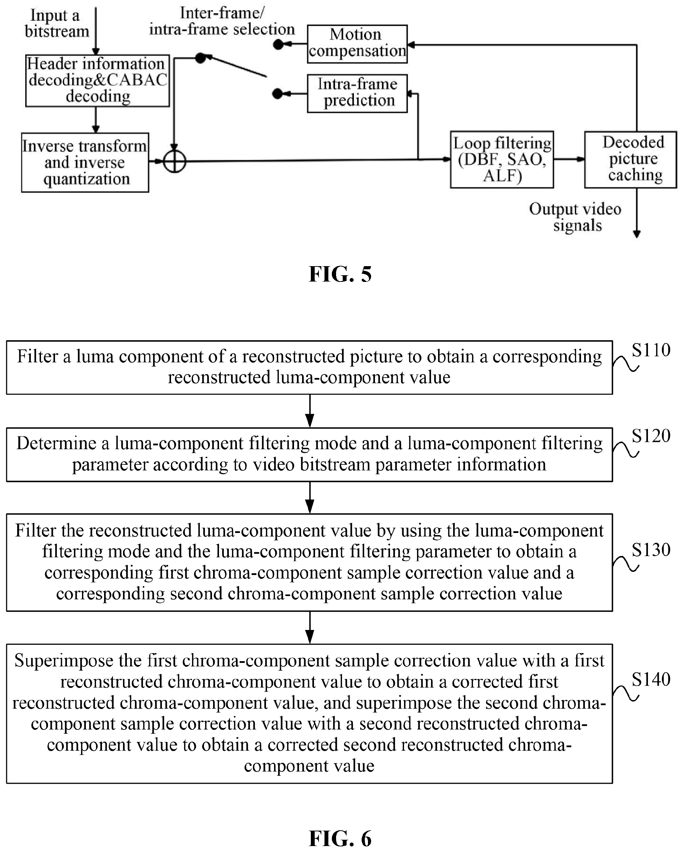

FIG. 5 is a schematic diagram of an implementation of an H.266/VVC decoding framework according to the related art. As shown in FIG. 5, an overall framework process of a decoding end is described below.
(1) A bitstream is parsed to obtain a prediction mode and a predicted value.
(2) A residual obtained by parsing the bitstream is subjected to inverse transform and inverse quantization.
(3) The predicted value is added to the residual subjected to the inverse quantization and the inverse transform to obtain a block reconstructed value, and a reconstructed picture is finally formed.
(4) The reconstructed picture is subjected to a filtering operation through a loop filter and stored in a picture buffer to be used as a reference picture in the future.

The partition mode prediction method provided in the solution of the present application is applied to a loop filtering module. Using the H.266/VVC video coding standard as an example, the loop filtering module includes processing stages such as the DBF, the SAO, and the ALF. The filtering methods, such as the luma ALF, the chroma ALF, and the cross-component ALF, in the ALF techniques are all based on the Wiener filtering principle. Specifically, a series of filter coefficients having the minimum mean square error are solved from the Wiener-Hopf equation established by original picture information and reconstructed picture information, thereby reducing decoding errors and effectively improving the peak signal-to-noise ratio (PSNR). To further reduce the distortion between the reconstructed picture and the original picture, the solution of the present application provides a loop filtering method in which output values of a fixed filter are introduced into the CC-ALF filtering module as input signals. In this manner, detailed texture information of the luma component can be more effectively utilized to provide compensation for details of the chroma component, thereby improving the reconstruction quality of the chroma component.

It is to be noted that technical solutions provided in embodiments of the present application can be applied to the H.266/VVC standard, AVS (such as AVS3), or next-generation video codec standards, which are not limited in the embodiments of the present application.

In an embodiment, FIG. 6 is a flowchart of a video processing method according to an embodiment of the present application. This embodiment is applicable to improving the chroma component of a video picture. This embodiment can be executed by a decoding end (also known as a decoder). As shown in FIG. 6, the embodiment includes S110 to S140.

In S110, a luma component of a reconstructed picture is filtered to obtain a corresponding reconstructed luma-component value.

In an example, the process of filtering the luma component of the reconstructed picture may include performing DBF processing, BIF processing, SAO processing, and at least one filtering processing using at least one fixed filter on the luma component of the reconstructed picture.

In S120, a luma-component filtering mode and a luma-component filtering parameter are determined according to video bitstream parameter information.

In S130, the reconstructed luma-component value is filtered by using the luma-component filtering mode and the luma-component filtering parameter to obtain a corresponding first chroma-component sample correction value and a corresponding second chroma-component sample correction value.

The process of filtering the reconstructed luma-component value may be a process of performing CC-ALF filtering on the reconstructed luma-component value.

In S140, the first chroma-component sample correction value is superimposed with a first reconstructed chroma-component value to obtain a corrected first reconstructed chroma-component value, and the second chroma-component sample correction value is superimposed with a second reconstructed chroma-component value to obtain a corrected second reconstructed chroma-component value.

In an embodiment, before the luma component of the reconstructed picture is filtered to obtain the corresponding reconstructed luma-component value, the method further includes: parsing a received coded video bitstream to obtain the corresponding video bitstream parameter information; and decoding the coded video bitstream to obtain the corresponding reconstructed picture.

In an embodiment, after the luma component of the reconstructed picture is filtered to obtain the corresponding reconstructed luma-component value, the method further includes: performing an ALF filtering operation on a first chroma component and a second chroma component in the reconstructed picture to obtain the corresponding first reconstructed chroma-component value and the corresponding second reconstructed chroma-component value.

In an embodiment, before the reconstructed luma-component value is filtered by using the luma-component filtering mode and the luma-component filtering parameter, the method further includes: classifying the reconstructed luma-component value by using a preconfigured luma-component sample classification strategy to obtain a classified reconstructed luma-component value.

In an embodiment, filtering the reconstructed luma-component value by using the luma-component filtering mode and the luma-component filtering parameter includes: filtering a reconstructed luma-component value of each category, where different luma-component filtering parameters and different luma-component filtering modes are used for filtering reconstructed luma-component values of different categories.

In an embodiment, the luma-component sample classification strategy includes at least one of: an ALF filtering processing mode-based classification strategy, an improved ALF filtering processing mode-based classification strategy, a basic sample residual-based classification strategy, or a region partition-based classification strategy.

In an embodiment, filtering the luma component of the reconstructed picture to obtain the corresponding reconstructed luma-component value includes: performing one or more filterings on the luma component of the reconstructed picture according to a preset order to obtain the corresponding reconstructed luma-component value, where a filtering processing process includes at least one of the following:
deblocking filtering processing;
bilateral filtering processing;
pixel adaptive offset processing;
filtering processing using a single fixed filter; or
filtering processing using at least two cascaded fixed filters. In an example, DBF processing, BIF processing, SAO processing, and at least one filtering processing using at least one fixed filter may be performed on the luma component of the reconstructed picture to obtain one or more corresponding reconstructed luma-component values.

In an embodiment, filtering the luma component of the reconstructed picture to obtain the corresponding reconstructed luma-component value includes: filtering the luma component of the reconstructed picture to obtain one or more reconstructed luma-component values. In the case where one reconstructed luma-component value is obtained, it may be regarded as a filtering process of a CC-ALF with a single input signal. In the case where multiple reconstructed luma-component values are obtained, it may be regarded as a filtering process of a CC-ALF with multiple input signals.

In an embodiment, the video bitstream parameter information includes at least one of: a CC-ALF enable flag in a sequence parameter set (SPS), a CC-ALF enable flag in a picture parameter set (PPS), a CC-ALF enable flag and a filter identifier in a picture header (PH), a CC-ALF enable flag and a filter identifier in a slice header (SH), a filter identifier in a coding tree unit (CTU), or CC-ALF parameter information in an adaptation parameter set (APS).

The CC-ALF parameter information in the APS includes at least the following parameters: the number of CC-ALF coefficients, absolute values of the CC-ALF coefficients, and signs of the CC-ALF coefficients.

In an embodiment, the video bitstream parameter information further includes at least one of the following:
an input sample category identifier or index that is used for CC-ALF filtering and is included in the sequence parameter set, the picture parameter set, the picture header, the slice header, or the coding tree unit; or
a chroma-component CC-ALF input sample category identifier or index that is included in the adaptation parameter set.

In an embodiment, the CC-ALF parameter information in the adaptation parameter set corresponds to the first chroma component and the second chroma component.

In an embodiment, filtering the reconstructed luma-component value by using the luma-component filtering mode and the luma-component filtering parameter includes:
filtering the reconstructed luma-component value according to a preset luma-component filtering mode and the luma-component filtering parameter; or
filtering the reconstructed luma-component value according to a luma-component filtering mode specified by the video bitstream parameter information and the luma-component filtering parameter.

In an embodiment, filtering the reconstructed luma-component value according to the preset luma-component filtering mode and the luma-component filtering parameter includes: according to a CC-ALF enable flag, performing CC-ALF filtering processing on a luma component of the current picture; and determining a CC-ALF coefficient, and filtering the reconstructed luma-component value according to the preset luma-component filtering mode. The current picture may be understood as the reconstructed picture described in the preceding embodiments.

In an embodiment, filtering the reconstructed luma-component value according to the luma-component filtering mode specified by the video bitstream parameter information and the luma-component filtering parameter includes: according to a CC-ALF enable flag, performing CC-ALF filtering processing on a luma component of the current picture; determining, according to an input sample category identifier or index that is used for CC-ALF filtering, a number and types of reconstructed luma-component values used for the CC-ALF filtering; and determining a CC-ALF coefficient and filtering the reconstructed luma-component values.

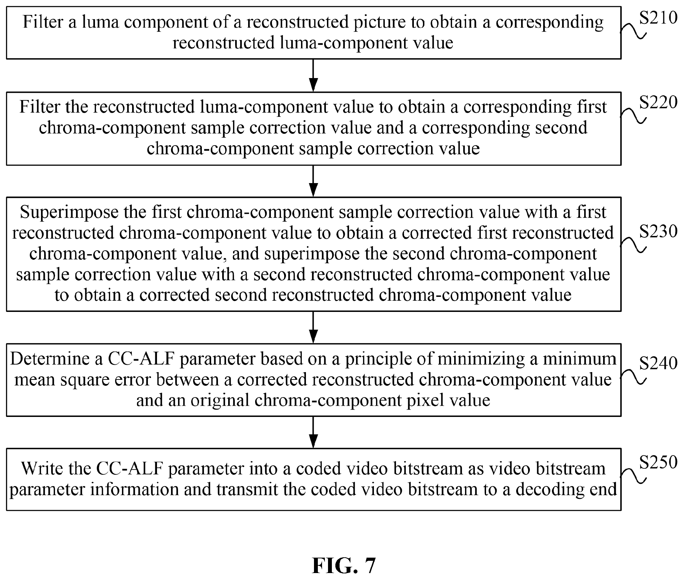

In an embodiment, FIG. 7 is another flowchart of a video processing method according to an embodiment of the present application. This embodiment is applicable to improving the chroma component of a video picture. This embodiment can be executed by an encoding end (also known as an encoder). As shown in FIG. 7, this embodiment includes S210 to S250.

In S210, a luma component of a reconstructed picture is filtered to obtain a corresponding reconstructed luma-component value.

In S220, the reconstructed luma-component value is filtered to obtain a corresponding first chroma-component sample correction value and a corresponding second chroma-component sample correction value.

In S230, the first chroma-component sample correction value is superimposed with a first reconstructed chroma-component value to obtain a corrected first reconstructed chroma-component value, and the second chroma-component sample correction value is superimposed with a second reconstructed chroma-component value to obtain a corrected second reconstructed chroma-component value.

In S240, a CC-ALF parameter is determined based on a principle of minimizing a minimum mean square error between a corrected reconstructed chroma-component value and an original chroma-component pixel value.

In S250, the CC-ALF parameter is written into a coded video bitstream as video bitstream parameter information, and the coded video bitstream is transmitted to a decoding end.

In an embodiment, after the luma component of the reconstructed picture is filtered to obtain the corresponding reconstructed luma-component value, the method further includes:
classifying the reconstructed luma-component value by using a preconfigured luma-component sample classification strategy to obtain a classified reconstructed luma-component value.

In an embodiment, filtering the luma component of the reconstructed picture to obtain the corresponding reconstructed luma-component value includes:
performing one or more filterings on the luma component of the reconstructed picture according to a preset order to obtain the corresponding reconstructed luma-component value, where the filtering processing process includes at least one of:
deblocking filtering processing;
bilateral filtering processing;
pixel adaptive offset processing;
filtering processing using a single fixed filter; or
filtering processing using at least two cascaded fixed filters.

In an embodiment, the luma-component sample classification strategy includes at least one of: an ALF filtering processing mode-based classification strategy, an improved ALF filtering processing mode-based classification strategy, a basic sample residual-based classification strategy, or a region partition-based classification strategy.

In an embodiment, after the luma component of the reconstructed picture is filtered to obtain the corresponding reconstructed luma-component value, the method further includes:
performing an ALF filtering operation on a first chroma component and a second chroma component in the reconstructed picture to obtain the corresponding first reconstructed chroma-component value and the corresponding second reconstructed chroma-component value.

In an embodiment, the video bitstream parameter information includes at least one of: a CC-ALF enable flag in an SPS, a CC-ALF enable flag in a PPS, a CC-ALF enable flag and a filter identifier in a PH, a CC-ALF enable flag and a filter identifier in an SH, a filter identifier in a CTU, or CC-ALF parameter information in an APS.

The CC-ALF parameter information in the APS includes at least the following parameters: the number of CC-ALF coefficients, absolute values of the CC-ALF coefficients, and signs of the CC-ALF coefficients.

In an embodiment, the video bitstream parameter information further includes at least one of:
an input sample category identifier or index that is used for CC-ALF filtering and is included in the sequence parameter set, the picture parameter set, the picture header, the slice header, or the coding tree unit; or
a chroma-component CC-ALF input sample category identifier or index that is included in the adaptation parameter set.

In an embodiment, the CC-ALF parameter information in the adaptation parameter set corresponds to a first chroma component and a second chroma component.

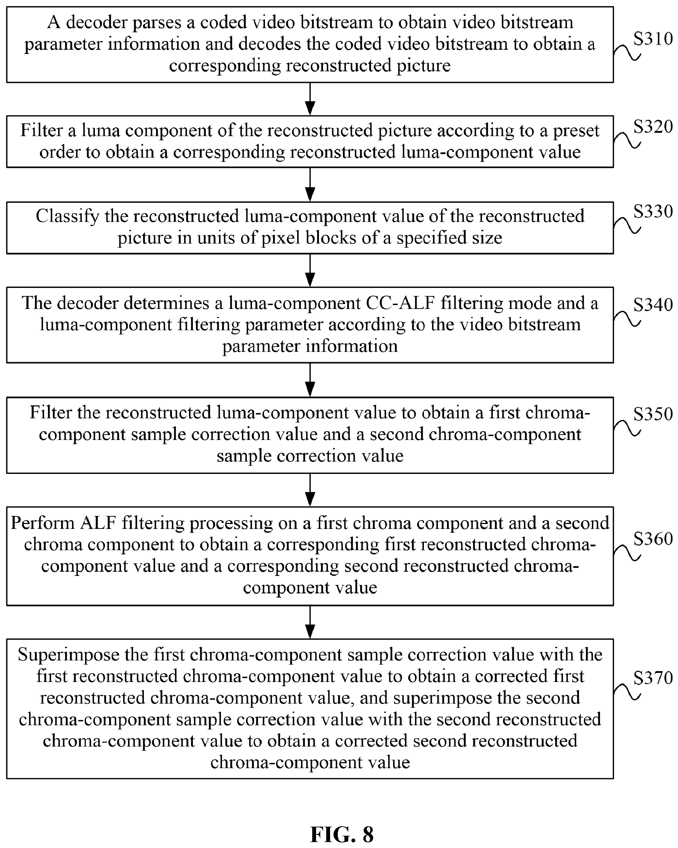

In a first embodiment, FIG. 8 is a flowchart of a video processing method applied to a decoding end according to an embodiment of the present application. This embodiment describes a cross-component loop filtering method based on a fixed filter, which is applied to a loop filtering module in video decoding to filter a reconstructed frame in a video. The input to the cross-component loop filtering is based on the output of the fixed filter, including a single output value generated by a single fixed filter or multiple cascaded fixed filters, or the superimposition of output signals of multiple fixed filters, and different input to the cross-component loop filtering corresponds to a different filtering template and a different filter coefficient, respectively. As shown in FIG. 8, this embodiment includes the following.

In S310, a decoder parses a coded video bitstream to obtain video bitstream parameter information and decodes the coded video bitstream to obtain a corresponding reconstructed picture.

The decoding end parses the coded video bitstream to obtain the video bitstream parameter information that includes identifying parameter information of the APS. An ALF filtering coefficient set includes a fixed subset and an APS subset. The fixed subset is a filter coefficient subset obtained through pre-training. Since the fixed subset has been specified by the standard, no transmission is required. The APS subset is a filtering coefficient subset generated by using the Wiener filtering principle according to the reconstructed picture in the current video bitstream.

After the coded video bitstream is decoded, the decoded picture is further subjected to luma mapping with chroma scaling (LMCS) processing to obtain the reconstructed picture. The LMCS is a coding tool newly introduced in the VVC and is intended to improve video coding efficiency by fully utilizing the luma value range and the electro-optical transfer characteristics.

In S320, filtering processing is performed on a luma component of the reconstructed picture according to a preset order to obtain a corresponding reconstructed luma-component value.

The filtering processing may include the DBF and the SAO, followed by filtering the filtering result with the fixed filter to obtain the filtered reconstructed luma-component value.

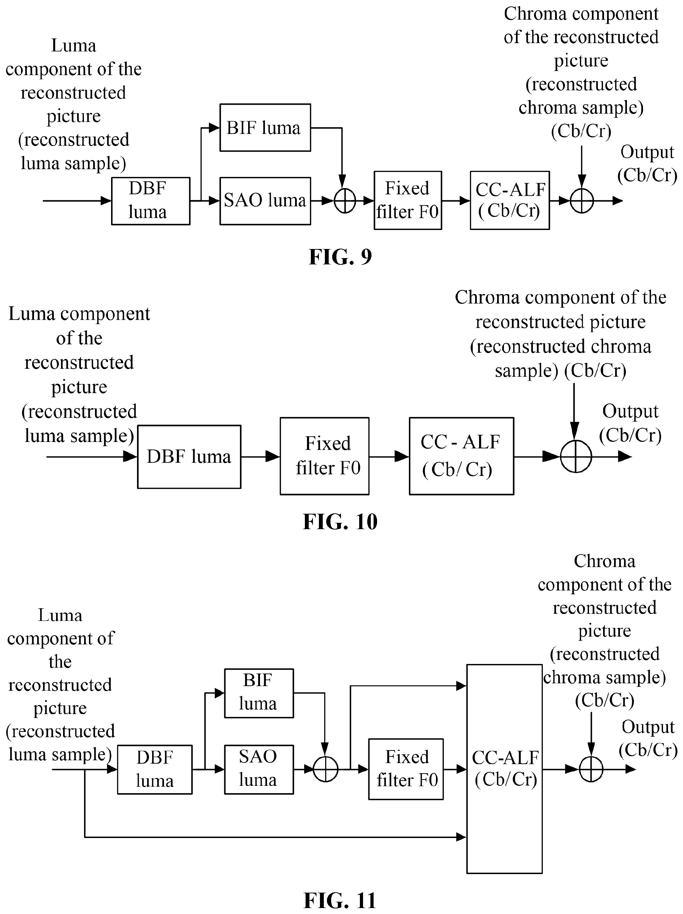

During the actual filtering processing process, the filtering processing performed on the luma component of the reconstructed picture may have multiple orders. For example:
1) After the luma component of the reconstructed picture is subjected to the processing of the DBF, the BIF, and the SAO, the filtering result is further filtered by a single fixed filter or multiple cascaded fixed filters to obtain the reconstructed luma-component value. For example, FIG. 9 is a configuration diagram of a CC-ALF filtering structure with a single input signal according to an embodiment of the present application. See FIG. 9.
2) After the luma component of the reconstructed picture is subjected to the processing of the DBF, the BIF, and the SAO, the filtering result is filtered by two or more fixed filters to obtain multiple reconstructed luma-component values.
3) The luma component of the reconstructed picture is not subjected to the processing of the DBF, the BIF, and the SAO, or is subjected only to the filtering processing of the DBF, or the processing of the SAO. The filtering result is then filtered by a single fixed filter or multiple cascaded fixed filters to obtain the reconstructed luma-component value, where the multiple cascaded fixed filters are arranged according to a preset cascade sequence.
4) The luma component of the reconstructed picture is not subjected to the processing of the DBF and the SAO, or is subjected only to the filtering processing of the DBF, or the processing of the DBF and the SAO. The filtering result is filtered by multiple fixed filters to obtain multiple reconstructed luma-component values.

It should be noted that the preceding processing orders are examples of implementation and are not intended to limit the embodiments of the present application.

In S330, the reconstructed luma-component value of the reconstructed picture is classified in units of pixel blocks of a specified size.

In the embodiments of the present application, multiple dimensional classification strategies for the reconstructed luma-component value are supported, including a conventional ALF filtering processing mode-based classification strategy, an improved ALF filtering processing mode-based classification strategy, a basic sample residual-based classification strategy, and a region partition-based classification strategy. It should be noted that the classification strategies below are examples of implementation and are not intended to limit the embodiments of the present application.
1) The conventional ALF filtering processing mode-based classification strategy:
   a. Calculate a Laplacian gradient: For each 4 × 4 luma block, one-dimensional Laplace operator gradients *gₕ*, *gᵥ*, *g*_{*d*1}, *g*_{*d*2} in the horizontal 0°, vertical 90°, 135°, and 45° directions are calculated for each pixel in an 8 × 8 pixel block centered on this 4 × 4 luma block.
   b. Calculate a directional factor D: First, according to the Laplacian gradient, the ratio of the maximum gradient to the minimum gradient in the horizontal and vertical directions and the ratio of the maximum gradient to the minimum gradient in the diagonal directions are calculated as follows: ${r}_{h , v} = \frac{max \left({g}_{h}, {g}_{v}\right)}{min \left({g}_{h}, {g}_{v}\right)} , {r}_{d 1 , d 2} = \frac{max \left({g}_{d 1}, {g}_{d 2}\right)}{min \left({g}_{d 1}, {g}_{d 2}\right)}$
      *max*(*gₕ, gᵥ*) represents the maximum gradient in the horizontal and vertical directions; *min*(*gₕ, gᵥ*) represents the minimum gradient in the horizontal and vertical directions; *r_{h,v}* represents the ratio of the maximum gradient to the minimum gradient in the horizontal and vertical directions; *max*(*g*_{*d*1},*g*_{*d*2}) represents the maximum gradient in the diagonal directions; *min*(*g*_{*d*1}, *g*_{*d*2}) represents the minimum gradient in the diagonal directions; and *r*_{*d*1*,d*2} represents the ratio of the maximum gradient to the minimum gradient in the diagonal directions.
      Then, the obtained ratios are compared with preset thresholds *T₁* and *T₂* to obtain the directional factor.
   c. Calculate an activity factor A: The activity factor A reflects the gradient magnitude and is obtained by looking up a Laplacian gradient table.
   d. Calculate the classification result: $classIdx = 5 ∗ D + A$
2) The improved ALF filtering processing mode-based classification strategy:
   a. Calculate a Laplacian gradient: For each 2 × 2 luma block, one-dimensional Laplace operator gradients *gₕ, gᵥ, g*_{*d*1}, *g*_{*d*2} in the horizontal 0°, vertical 90°, 135°, and 45° directions are calculated for each pixel in a 4 × 4 pixel block centered on this 2 × 2 luma block.
   b. Calculate a directional factor *D̃*: The ratio rl of the maximum gradient to the minimum gradient in the horizontal and vertical directions and the ratio *r_{h,v}, r*_{*d*1,*d*2} of the maximum gradient to the minimum gradient in the diagonal directions are calculated. The two ratios are then compared with a preset set of thresholds *Th =* [1.25,1.5,2,3,4.5,8] to calculate the horizontal/vertical edge strength *E_{HV}* and the diagonal edge strength *E_{D}.* Finally, the value of the directional factor *D̃* is obtained through table lookup.
   c. Calculate an activity factor *Ã*: The activity factor *Ã* is obtained by looking up a Laplacian gradient table.
   d. Calculate the classification result: ${classIdx}^{˜} = {A}^{˜} ∗ {M}_{D} + {D}^{˜}$
      *M_{D}* represents the total number of directional factors *D̃*.
3) The basic sample residual-based classification strategy:
   For each 2 × 2 luma block, the sum of the absolute values of residual samples within an 8 × 8 window centered on this 2 × 2 luma block is calculated. The classification result is then determined as: $classIdx = sum ≫ \left(bit_depth-4\right)$
   *bit_depth* represents the bit depth of the samples.
4) The region partition-based classification strategy: The entire frame of picture or slice is partitioned into multiple regions, each region including an integer number of consecutive CTUs. All regions maintain approximately the same number of CTUs. Classification is then performed based on the regions of the luma component of the reconstructed picture. For example, the picture may be classified into eight categories, with the number of CTUs in each category being as equal as possible.

In S340, the decoder determines a luma-component CC-ALF filtering mode and a luma-component filtering parameter according to the video bitstream parameter information.

In S350, the reconstructed luma-component value is filtered to obtain a first chroma-component sample correction value and a second chroma-component sample correction value.

The first chroma-component sample correction value may be denoted as *R̃_{Cb}*(*x*, *y*), and the second chroma-component sample correction value may be denoted as *R̃_{Cr}*(*x*, *y*). In a video coded bitstream, information related to the input signal adaptive cross-component loop filtering method is represented through high-level syntax, and the information includes an input signal adaptive cross-component loop filter enable flag, an input signal adaptive cross-component loop filter category indicator, and an input signal adaptive cross-component loop filter coefficient. At the encoding end, the encoder writes the preceding information into coded video data so that the decoder can decode the header information and perform a cross-component filtering operation based on the obtained filter information. In the embodiment of the present application, the video bitstream parameter information includes at least one of the following:
1) A CC-ALF enable flag in a sequence parameter set (SPS): whether CC-ALF filtering is enabled for the current video sequence is determined according to a sequence-level CC-ALF enable flag in the coded video bitstream.
2) A CC-ALF enable flag in a picture parameter set (PPS): the operation level of CC-ALF filtering, that is, a video unit to which filter information is applied, is determined according to the picture-level identifier of the CC-ALF enable flag. The CC-ALF filtering may be applied to the entire reconstructed picture or to one or more slices of the reconstructed picture.
3) A CC-ALF enable flag and a CC-ALF identifier (ID) in a picture header (PH): whether a chroma component of the current picture, including a first chroma component Cb and a second chroma component Cr, is subjected to the CC-ALF filtering is determined according to the CC-ALF enable flag in the picture header of the current picture. The CC-ALF ID is used to determine the identifier corresponding to filter parameters used for the current picture in the APS.
4) A CC-ALF enable flag and a CC-ALF ID in a slice header (SH): whether a chroma component of the current slice, including the first chroma component Cb and the second chroma component Cr, is subjected to the CC-ALF filtering is determined according to the CC-ALF enable flag in the slice header of the current picture. The CC-ALF ID is used to determine the identifier corresponding to filter parameters used for the current slice in the APS.
5) A filter ID in the slice header (SH): the CC-ALF ID is used to determine the identifier corresponding to filter parameters used for the current CTU in the APS.
6) CC-ALF parameter information in an adaptation parameter set (APS) corresponds to the first chroma component Cb and the second chroma component Cr.

The CC-ALF parameter information in the APS includes at least the following parameters: the number of CC-ALF coefficients, absolute values of the CC-ALF coefficients, and signs of the CC-ALF coefficients.

In the process of filtering various categories of luma-component samples in this embodiment, input signals of the luma component are the reconstructed luma-component value obtained in S320, that is, reconstructed sample values after being filtered by the fixed filter. According to different settings of the fixed filter, the CC-ALF filtering process includes one of the following manners:
1) For CC-ALF filtering with a single input signal, reconstructed luma values at different nodes may be selected as the input signal of the luma component. As shown in the first example of the CC-ALF structure in FIG. 9, the reconstructed value obtained after sequential filtering processing of the DBF, the BIF, the SAO, and a fixed filter (that is, fixed filter F0) is selected as the input signal of the CC-ALF. FIG. 10 is another configuration diagram of a CC-ALF filtering structure with a single input signal according to an embodiment of the present application. As shown in the second example of the CC-ALF structure in FIG. 10, the reconstructed luma-component value obtained after sequential filtering processing of the DBF and the fixed filter (that is, fixed filter F0) is selected as the input signal of the CC-ALF.

The filtering processing process is as shown in formula 1. ${R}^{˜} \left(x, y\right) = R \left(x, y\right) + {\sum }_{i = 0}^{K} {c}_{i} \left({f}_{i , 0}+{f}_{i , 1}\right)$ (1)

*R̃*(*x, y*) represents a filtered pixel value (for example, it may be the first chroma-component sample correction value *R̃_{Cb}*(*x, y*), or the second chroma-component sample correction value *R̃_{Cr}*(*x, y*)); *R*(*x, y*) represents the current to-be-filtered pixel value (for example, it may be a reconstructed luma-component value); *f*_{*i,*0} and *f*_{*i*,1} represent clipping values of the differences between neighboring pixels covered by a CC-ALF template used by the decoder and the current pixel; and *cᵢ* (*i* = 0,...*K*) represents a filter coefficient at a corresponding position in the filter template, which needs to be obtained by parsing the coded video bitstream. Various configurations of the shape and size of the CC-ALF template may be supported. Currently, the CC-ALF used in the VVC is a 3 × 4 diamond filter. In the enhanced coding ECM reference software, the CC-ALF template is extended to a 9 × 9 diamond filter with a total of 25 tap coefficients. This embodiment does not impose any limitation on the shape and size of the CC-ALF template.

2) For CC-ALF filtering with multiple input signals, in addition to the reconstructed luma-component sample, the input signals may further include the luma-component sample residual or the pixel value obtained after filtering processing performed on the luma-component sample residual through a fixed filter. This embodiment imposes no limitation thereon. For example, FIG. 11 is a configuration diagram of a CC-ALF filtering structure with multiple input signals according to an embodiment of the present application. When the input signals of the CC-ALF filtering include the reconstructed luma-component value obtained after filtering processing of the DBF, the SAO, and the BIF, the reconstructed luma-component value obtained after filtering processing of the DBF, the SAO, the BIF, and a fixed filter (that is, fixed filter F0), and the reconstructed luma-component value without filtering processing of the DBF or the SAO, the CC-ALF filtering structure is as shown in FIG. 11.

The filtering processing process is as shown in formula 2. ${R}^{˜} \left(x, y\right) = R \left(x, y\right) + \left[{\sum }_{i = 0}^{K} {c}_{i} \left({f}_{i , 0}+{f}_{i , 1}\right)\right] + \left[{\sum }_{i = K + 1}^{M} {c}_{i} {g}_{i}\right] + \left[{\sum }_{i = M + 1}^{N} {c}_{i} \left({h}_{i , 0}+{h}_{i , 1}\right)\right]$ (2)

*R̃*(*x*, *y*) represents a filtered pixel value (for example, it may be the first chroma-component sample correction value *R̃_{Cb}*(*x*, *y*), or the second chroma-component sample correction value *R̃_{Cr}*(*x*, *y*)); *R*(*x*, *y*) represents the current to-be-filtered pixel value (for example, it may be the reconstructed luma-component value); *f*_{*i,*0} and *f*_{*i,*1} represent clipping values of the differences between neighboring pixels covered by a CC-ALF template used by the decoder and the current pixel; *gᵢ* represents a clipping value of the difference between an output value generated by a fixed filter and the current to-be-filtered pixel value; *cᵢ* represents a CC-ALF coefficient corresponding to the output value of the fixed filter, which needs to be obtained by parsing the coded video bitstream, where *i* = *K* + 1,...*M*; and *h*_{*i*,0} and *h*_{*i*,1} represent clipping values of the differences between luma-component sample values before the filtering of the DBF within a region covered by the filter template and the current pixel.

In S360, ALF filtering processing is performed on a first chroma component and a second chroma component to obtain a corresponding first reconstructed chroma-component value and a corresponding second reconstructed chroma-component value.

In S370, the first chroma-component sample correction value is superimposed with the first reconstructed chroma-component value to obtain a corrected first reconstructed chroma-component value, and the second chroma-component sample correction value is superimposed with the second reconstructed chroma-component value to obtain a corrected second reconstructed chroma-component value.

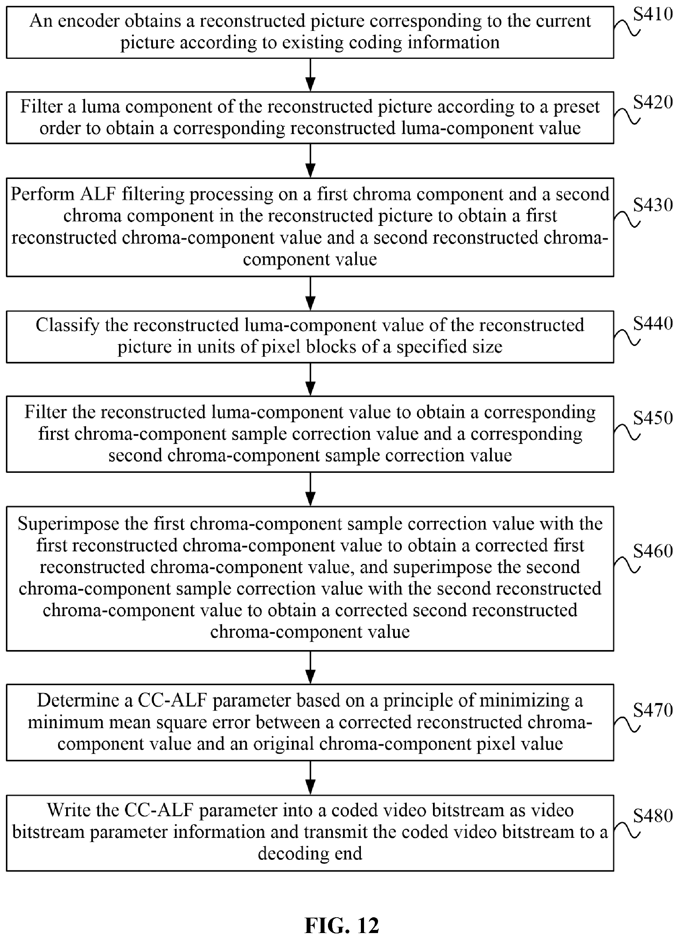

In a second embodiment, FIG. 12 is a flowchart of a video processing method applied to an encoding end according to an embodiment of the present application. This embodiment describes a cross-component loop filtering method based on a fixed filter, which is applied to a loop filtering module in video coding to filter a reconstructed frame in a video. The input to the cross-component loop filtering is based on the output of the fixed filter, including a single output value generated by a single fixed filter or multiple cascaded fixed filters, or the superimposition of output signals of multiple fixed filters, and different input to the cross-component loop filtering corresponds to a different filtering template and a different filter coefficient. As shown in FIG. 12, this embodiment includes the following.

In S410, an encoder obtains a reconstructed picture corresponding to the current picture according to existing coding information.

In S420, filtering processing is performed on a luma component of the reconstructed picture according to a preset order to obtain a corresponding reconstructed luma-component value.

The filtering processing may include the DBF and the SAO, followed by filtering processing of the fixed filter on the filtering result to obtain the filtered reconstructed luma-component value.

During the actual filtering processing process, the filtering processing performed on the luma component of the reconstructed picture may have multiple orders. Reference may be made to the description of S320 in the preceding embodiment, and details are not limited in this embodiment.

In S430, ALF filtering processing is performed on a first chroma component and a second chroma component in the reconstructed picture to obtain a first reconstructed chroma-component value and a second reconstructed chroma-component value.

In S440, the reconstructed luma-component value of the reconstructed picture is classified in units of pixel blocks of a specified size.

In this embodiment, multiple dimensional luma-component sample classification strategies are supported, including a conventional ALF filtering processing mode-based classification strategy, an improved ALF filtering processing mode-based classification strategy, a basic sample residual-based classification strategy, and a region partition-based classification strategy. It should be noted that the preceding classification methods are examples of implementation, and are not intended to limit the embodiments of the present application.

In S450, the reconstructed luma-component value is filtered to obtain a corresponding first chroma-component sample correction value and a corresponding second chroma-component sample correction value.

The reconstructed luma-component value of each category is filtered to obtain the corresponding first chroma-component sample correction value and the corresponding second chroma-component sample correction value.

In S460, the first chroma-component sample correction value is superimposed with the first reconstructed chroma-component value to obtain a corrected first reconstructed chroma-component value, and the second chroma-component sample correction value is superimposed with the second reconstructed chroma-component value to obtain a corrected second reconstructed chroma-component value.

In the process of filtering the reconstructed luma-component value according to this embodiment, input signals of the luma component are the reconstructed luma-component value obtained in S420, that is, the reconstructed luma-component value after being filtered by the fixed filter. According to different settings of the fixed filter, the CC-ALF filtering process includes one of the following manners:
1) For CC-ALF filtering with a single input signal, the filtering processing process is as shown in formula (1) of the first embodiment described above. The shape and size of the CC-ALF template are not limited.
2) For CC-ALF filtering with multiple input signals, in addition to the reconstructed luma-component sample, the input signals may further include the luma-component sample residual or the pixel value obtained after filtering processing performed on the luma-component sample residual through a fixed filter. This embodiment imposes no limitation thereon. Likewise, the shape and size of the CC-ALF template are not limited.

In S470, a CC-ALF parameter is determined based on a principle of minimizing a minimum mean square error between a corrected reconstructed chroma-component value and an original chroma-component pixel value.

For each filter class, all pixel blocks of a specified size that use this filter class are considered as a whole. The CC-ALF parameter is derived using the Wiener-Hopf equation such that the minimum mean square error (MSE) between the original chroma-component pixel value and the result obtained by superimposing the output after the CC-ALF filtering with a chroma component is minimized.

In S480, the CC-ALF parameter is written into a coded video bitstream as video bitstream parameter information, and the coded video bitstream is transmitted to a decoding end.

The video bitstream parameter information in this embodiment further includes at least one of the following:
1) A CC-ALF enable flag in a sequence parameter set (SPS).
2) A CC-ALF enable flag in a picture parameter set (PPS).
3) A CC-ALF enable flag and a CC-ALF identifier (ID) in a picture header (PH), including filtering enable flags and filter IDs for a first chroma component Cb and a second chroma component Cr.
4) A CC-ALF enable flag and a CC-ALF ID in a slice header (SH), including filtering enable flags and filter IDs for the first chroma component Cb and the second chroma component Cr.
5) A filter ID in the slice header (SH).
6) CC-ALF parameter information in an adaptation parameter set (APS) corresponds to the first chroma component Cb and the second chroma component Cr.

The CC-ALF parameter information in the APS includes at least the following parameters: the number of CC-ALF coefficients, absolute values of the CC-ALF coefficients, and signs of the CC-ALF coefficients.

In a third embodiment, this embodiment describes an input signal adaptive cross-component loop filtering method. The method is applied to a loop filtering module in video decoding to filter a reconstructed frame in a video. An input signal of the cross-component loop filtering is provided with multiple solutions, including a single output value of a single fixed filter or of multiple cascaded fixed filters, or the superposition of output signals of multiple fixed filters, and different input to the cross-component loop filtering corresponds to a different filtering template and a different filter coefficient. A decoder determines a cross-component loop filtering mode and a filter coefficient according to parameter information in the bitstream and completes the filtering processing process. The steps included in the cross-component loop filtering process in this embodiment are the same as those in the first embodiment described above. The difference lies in that parameters included in the video bitstream parameter information are different.

In step 1, the decoder parses a coded video bitstream to obtain video bitstream parameter information and decodes the coded video bitstream to obtain a corresponding reconstructed picture.

This is the same as S310 in the first embodiment described above.

In step 2, a luma component of the reconstructed picture is filtered according to a preset order to obtain a corresponding reconstructed luma-component value.

This is the same as S320 in the first embodiment described above.

In step 3, the reconstructed luma-component value of the reconstructed picture is classified in units of pixel blocks of a specified size.

This is the same as S330 in the first embodiment described above.

In step 4, the decoder determines a filtering input sample category, a filtering mode, and a filter parameter for luma-component CC-ALF according to the video bitstream parameter information.

In step 5, the reconstructed luma-component value is filtered to obtain a first chroma-component sample correction value *R̃_{Cb}*(*x, y*) and a second chroma-component sample correction value *R̃_{Cr}*(*x*, *y*).

The video bitstream parameter information in this embodiment includes at least one of the following:
1) A CC-ALF enable flag in a sequence parameter set (SPS): whether CC-ALF filtering is enabled for the current video sequence is determined according to a sequence-level CC-ALF enable flag in the coded video bitstream.
2) A CC-ALF enable flag in a picture parameter set (PPS): the operation level of CC-ALF filtering, that is, a video unit to which filter information is applied, is determined according to the picture-level identifier of the CC-ALF enable flag. The CC-ALF filtering may be applied to the entire reconstructed picture or to one or more slices of the reconstructed picture.
3) A CC-ALF enable flag and a CC-ALF ID in a picture header (PH), and an input sample category identifier or index that is used for CC-ALF filtering: whether a chroma component of the current picture, including a first chroma component Cb and a second chroma component Cr, is subjected to the CC-ALF filtering is determined according to the CC-ALF enable flag in the picture header of the current picture. The CC-ALF ID is used to determine the identifier corresponding to filter parameters used for the current picture in the APS. The CC-ALF input sample category identifier or index is used to determine the source of input samples for the CC-ALF of the current picture.
4) A CC-ALF enable flag and a CC-ALF ID in a slice header (SH), and an input sample category identifier or index that is used for CC-ALF filtering: whether a chroma component of the current slice, including the first chroma component Cb and the second chroma component Cr, is subjected to the CC-ALF filtering is determined according to the CC-ALF enable flag in the slice header of the current picture. The CC-ALF ID is used to determine the identifier corresponding to filter parameters used for the current slice in the APS. The CC-ALF input sample category identifier or index is used to determine the source of input samples for the CC-ALF of the current picture.
5) A filter ID in a coding tree unit (CTU) and an input sample category identifier or index that is used for CC-ALF filtering: the CC-ALF identifier (ID) is used to determine the identifier corresponding to filter parameters used for the current CTU in the APS. The CC-ALF input sample category identifier or index is used to determine the source of input samples for the CC-ALF of the current picture.
6) CC-ALF parameter information in an adaptation parameter set (APS) corresponds to the first chroma component Cb and the second chroma component Cr.

For a chroma-component CC-ALF input sample category identifier or index, different identifiers or indices represent different input samples or input sample combinations for the filter, which are predefined by an encoder and the decoder.

The CC-ALF parameter information in the APS includes at least the following parameters: the number of CC-ALF coefficients, absolute values of the CC-ALF coefficients, and signs of the CC-ALF coefficients.

The filtering processing process of various categories of luma-component samples in this embodiment is the same as S350 in the first embodiment.

In step 6, ALF filtering processing is performed on the chroma component, the first chroma-component sample correction value *R̃_{Cb}*(*x*, *y*) is superimposed with a first reconstructed chroma-component value to obtain a corrected first reconstructed chroma-component value, and the first chroma-component sample correction value *R̃_{Cr}*(*x*, *y*) is superimposed with a second reconstructed chroma-component value to obtain a corrected second reconstructed chroma-component value.

In a fourth embodiment, this embodiment describes an input signal adaptive cross-component loop filtering method. The method is applied to a loop filtering module in video coding to filter a reconstructed frame in a video. An input signal of the cross-component loop filtering supports multiple solutions, including a single output value of a single fixed filter or of multiple cascaded fixed filters, or the superposition of output signals of multiple fixed filters. An encoder performs filtering processing and cost (distortion between the reconstructed frame and the original frame) calculation using different filtering methods according to reconstructed pixel values and original pixel values of a picture. The encoder selects an optimal filtering method according to the RDcost of different filtering manners to complete the filtering process, and writes parameter information, such as a filtering mode indicator and a filter coefficient that correspond to the selected filtering method, into a video coded bitstream.

In step 1, the encoder obtains a reconstructed luma-component value of the current picture according to existing coding information.

In step 2, a luma component of a reconstructed picture is filtered according to a preset order to obtain a corresponding reconstructed luma-component value.

The filtering processing may include the DBF and the SAO, followed by filtering processing performed on the filtering result by a fixed filter to obtain the filtered reconstructed luma-component values.

During the actual filtering processing process, the filtering processing of the luma component of the reconstructed picture may have multiple orders. Reference may be made to the description of S320 in the first embodiment, and details are not limited in the present application.

In step 3, ALF filtering processing is performed on a first chroma component Cb and a second chroma component Cr in the reconstructed picture to obtain a first reconstructed chroma-component value and a second reconstructed chroma-component value.

In step 4, the reconstructed luma-component values of the reconstructed picture are classified in units of pixel blocks of a specified size.

In this embodiment, multiple dimensional luma-component sample classification strategies are supported, including a conventional ALF filtering processing mode-based classification strategy, an improved ALF filtering processing mode-based classification strategy, a basic sample residual-based classification strategy, and a region partition-based classification strategy. It should be noted that the preceding classification methods are examples of implementation, and are not intended to limit the present application.

In step 5, the reconstructed luma-component values are filtered to obtain a corresponding first chroma-component sample correction value and a corresponding second chroma-component sample correction value.

Reconstructed luma-component values of each category are filtered to obtain the corresponding first chroma-component sample correction value and the corresponding second chroma-component sample correction value.

For each filtering solution, step 5 is repeated to calculate the cost of each filtering solution, and a filtering solution with the lowest cost is selected as the final filtering solution. Filtering is performed according to related filter coefficients. The first chroma-component correction value *R̃_{Cb}*(*x, y*) output by the filtering and the first reconstructed chroma-component value obtained after the ALF filtering processing are superimposed to obtain the corrected first reconstructed chroma-component value. The second chroma-component correction value *R̃_{Cr}*(*x*, *y*) output by the filtering and the second reconstructed chroma-component value obtained after the ALF filtering processing are superimposed to obtain the corrected second reconstructed chroma-component value.

In this embodiment, two CC-ALF filtering solutions are supported, and either solution may be selected during implementation:
1) A single-input-signal-based filtering solution: the filtering processing process based on a single input signal of a fixed filter is as shown in formula (1) of the first embodiment, and the shape and size of the CC-ALF template are not limited. At the encoder and the decoder, a candidate set of input signals is configured in advance, and an index value (cc_idx) corresponding to each input signal is preset. For example,
   for the luma component after filtering processing of the SAO and filtering processing of fixed filter F0, cc_idx = 0;
   for the luma component after filtering processing of the SAO and filtering processing of fixed filter F0 and fixed filter F1 that are cascaded, cc_idx = 1;
   for the luma component after filtering processing of the DBF and filtering processing of fixed filter F0, cc_idx = 2;
2) A multiple-input-signal-based filtering solution: reconstructed luma values from multiple nodes in loop filtering are supported as the input signals of the CC-ALF. The filtering processing process therefor is as shown in formula (2) of the first embodiment, and the shape and size of the CC-ALF template are not limited. At the encoder and the decoder, a candidate set of each group of input signals is configured in advance, and an index value (cc_idx) corresponding to each group of input signals is preset. For example,
   for the input signals including the reconstructed luma value after SAO filtering, the reconstructed value output by the SAO and processed by fixed filter F0, and the reconstructed value output by the SAO and processed by fixed filter F1, cc_idx = 0;
   for the input signals including the reconstructed luma value after SAO filtering, the reconstructed value output by the SAO and filtered by fixed filter F0 and fixed filter F1 that are cascaded, and the reconstructed value without DBF filtering, cc_idx = 1;
   for the input signals including the reconstructed luma value without DBF filtering, the reconstructed value without DBF filtering and only after the processing of fixed filter F0, and the reconstructed value without DBF filtering and only after the processing of fixed filter F1, cc_idx = 2;

It is to be noted that the preceding configurations of the input signals and the indices are provided for illustrative purposes and are not intended to limit this embodiment.

In step 6, the first chroma-component sample correction value and the first reconstructed chroma-component value are superimposed to obtain a corrected first reconstructed chroma-component value, and the second chroma-component sample correction value and the second reconstructed chroma-component value are superimposed to obtain a corrected second reconstructed chroma-component value.

In step 7, a CC-ALF parameter is determined based on the principle of minimizing the minimum mean square error between a corrected reconstructed chroma-component value and an original chroma-component pixel value.

For each filter class, all pixel blocks of a specified size that use this filter class are considered as a whole. The CC-ALF parameter is derived using the Wiener-Hopf equation such that the minimum mean square error (MSE) between the original chroma-component pixel value and the result obtained by superimposing the output after the CC-ALF filtering with the chroma component is minimized.

In step 8, the CC-ALF parameter is written into a coded video bitstream as video bitstream parameter information, and the coded video bitstream is transmitted to a decoding end.

The video bitstream parameter information in this embodiment includes at least one of the following:
1) A CC-ALF enable flag in a sequence parameter set (SPS).
2) A CC-ALF enable flag in a picture parameter set (PPS).
3) A CC-ALF enable flag and a CC-ALF ID in a picture header (PH), and an input sample category identifier or index that is used for CC-ALF filtering.
4) A CC-ALF enable flag and a CC-ALF ID in a slice header (SH), and an input sample category identifier or index that is used for CC-ALF filtering.
5) A filter ID in a coding tree unit (CTU) and an input sample category identifier or index that is used for CC-ALF filtering.
6) CC-ALF parameter information in an adaptation parameter set (APS) corresponds to the first chroma component Cb and the second chroma component Cr.

The CC-ALF parameter information in the APS includes at least the following parameters: the input sample category identifier or index that is used for the CC-ALF, the number of CC-ALF coefficients, absolute values of the CC-ALF coefficients, and signs of the CC-ALF coefficients.

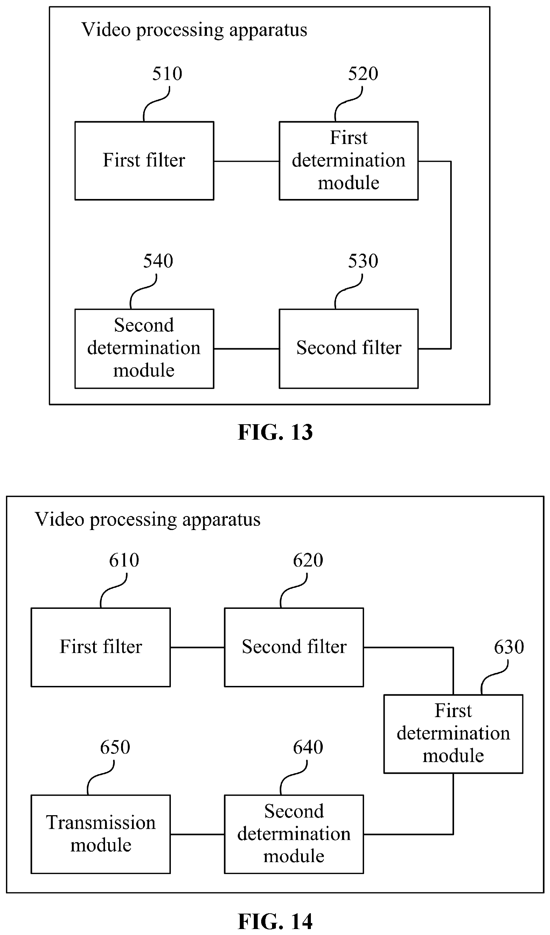

In an embodiment, FIG. 13 is a block diagram of a video processing apparatus according to an embodiment of the present application. This embodiment is applied to a decoding end. As shown in FIG. 13, the video processing apparatus in this embodiment includes a first filter 510, a first determination module 520, a second filter 530, and a second determination module 540.

The first filter 510 is configured to filter a luma component of a reconstructed picture to obtain a corresponding reconstructed luma-component value.

The first determination module 520 is configured to determine a luma-component filtering mode and a luma-component filtering parameter according to video bitstream parameter information.

The second filter 530 is configured to filter the reconstructed luma-component value by using the luma-component filtering mode and the luma-component filtering parameter to obtain a corresponding first chroma-component sample correction value and a corresponding second chroma-component sample correction value.

The second determination module 540 is configured to superimpose the first chroma-component sample correction value with a first reconstructed chroma-component value to obtain a corrected first reconstructed chroma-component value, and superimpose the second chroma-component sample correction value with a second reconstructed chroma-component value to obtain a corrected second reconstructed chroma-component value.

In an embodiment, before the luma component of the reconstructed picture is filtered to obtain the corresponding reconstructed luma-component value, the apparatus further includes a parsing module and a decoding module.

The parsing module is configured to parse a received coded video bitstream to obtain the corresponding video bitstream parameter information.

The decoding module is configured to decode the coded video bitstream to obtain the corresponding reconstructed picture.

In an embodiment, after the luma component of the reconstructed picture is filtered to obtain the corresponding reconstructed luma-component value, the video processing apparatus applied to the decoding end further includes a third filter.

The third filter is configured to perform an ALF filtering operation separately on a first chroma component and a second chroma component in the reconstructed picture to obtain the corresponding first reconstructed chroma-component value and the corresponding second reconstructed chroma-component value.

In an embodiment, before the reconstructed luma-component value is filtered by using the luma-component filtering mode and the luma-component filtering parameter, the video processing apparatus applied to the decoding end further includes a classification module.

The classification module is configured to classify the reconstructed luma-component value by using a preconfigured luma-component sample classification strategy to obtain a classified reconstructed luma-component value.

In an embodiment, filtering the reconstructed luma-component value by using the luma-component filtering mode and the luma-component filtering parameter includes:
filtering a reconstructed luma-component value of each category, where different luma-component filtering parameters and different luma-component filtering modes are used for different filtering processes of different categories.

In an embodiment, the luma-component sample classification strategy includes at least one of: an ALF filtering processing mode-based classification strategy, an improved ALF filtering processing mode-based classification strategy, a basic sample residual-based classification strategy, or a region partition-based classification strategy.

In an embodiment, filtering the luma component of the reconstructed picture to obtain the corresponding reconstructed luma-component value includes:
performing one or more filterings on the luma component of the reconstructed picture according to a preset order to obtain the corresponding reconstructed luma-component value, where the filtering processing process includes at least one of:
deblocking filtering processing;
bilateral filtering processing;
pixel adaptive offset processing;
filtering processing using a single fixed filter; or
filtering processing using at least two cascaded fixed filters.

In an embodiment, filtering the luma component of the reconstructed picture to obtain the corresponding reconstructed luma-component value includes:
filtering the luma component of the reconstructed picture to obtain one or more reconstructed luma-component values.

In an embodiment, the video bitstream parameter information includes at least one of: a CC-ALF enable flag in a sequence parameter set (SPS), a CC-ALF enable flag in a picture parameter set (PPS), a CC-ALF enable flag and a CC-ALF identifier in a picture header (PH), a CC-ALF enable flag and a CC-ALF identifier in a slice header (SH), a filter identifier in a coding tree unit (CTU), or CC-ALF parameter information in an adaptation parameter set (APS).

The CC-ALF parameter information in the APS includes at least the following parameters: the number of CC-ALF coefficients, absolute values of the CC-ALF coefficients, and signs of the CC-ALF coefficients.

In an embodiment, the video bitstream parameter information further includes at least one of:
an input sample category identifier or index that is used for CC-ALF filtering and is included in the sequence parameter set, the picture parameter set, the picture header, the slice header, or the coding tree unit; or
a chroma-component CC-ALF input sample category identifier or index that is included in the adaptation parameter set.

In an embodiment, the CC-ALF parameter information in the adaptation parameter set corresponds to the first chroma component and the second chroma component.

In an embodiment, filtering the reconstructed luma-component value by using the luma-component filtering mode and the luma-component filtering parameter includes:
filtering the reconstructed luma-component value according to a preset luma-component filtering mode and the luma-component filtering parameter; or
filtering the reconstructed luma-component value according to a luma-component filtering mode specified by the video bitstream parameter information and the luma-component filtering parameter.

In an embodiment, filtering the reconstructed luma-component value according to the preset luma-component filtering mode and the luma-component filtering parameter includes:
according to a CC-ALF enable flag, performing CC-ALF filtering processing on a luma component of the current picture; and
determining a CC-ALF coefficient, and filtering the reconstructed luma-component value according to the preset luma-component filtering mode.

In an embodiment, filtering the reconstructed luma-component value according to the luma-component filtering mode specified by the video bitstream parameter information and the luma-component filtering parameter includes:
according to a CC-ALF enable flag, performing CC-ALF filtering processing on a luma component of the current picture;
determining, according to an input sample category identifier or index that is used for CC-ALF filtering, a number and types of reconstructed luma-component values used for the CC-ALF filtering; and
determining a CC-ALF coefficient and filtering the reconstructed luma-component values.

The video processing apparatus provided in this embodiment is configured to perform the video processing method applied to the decoding end according to the embodiment shown in FIG. 6. The implementation principles and technical effects of the video processing apparatus provided in this embodiment are similar to those of the video processing method and thus are not repeated herein.

In an embodiment, FIG. 14 is another block diagram of a video processing apparatus according to an embodiment of the present application. This embodiment is applied to an encoding end. As shown in FIG. 14, the video processing apparatus in this embodiment includes a first filter 610, a second filter 620, a first determination module 630, a second determination module 640, and a transmission module 650.

The first filter 610 is configured to filter a luma component of a reconstructed picture to obtain a corresponding reconstructed luma-component value.

The second filter 620 is configured to filter the reconstructed luma-component value to obtain a corresponding first chroma-component sample correction value and a corresponding second chroma-component sample correction value.

The first determination module 630 is configured to superimpose the first chroma-component sample correction value with a first reconstructed chroma-component value to obtain a corrected first reconstructed chroma-component value, and superimpose the second chroma-component sample correction value and a second reconstructed chroma-component value to obtain a corrected second reconstructed chroma-component value.

The second determination module 640 is configured to determine a CC-ALF parameter based on a principle of minimizing a minimum mean square error between a corrected reconstructed chroma-component value and an original chroma-component pixel value.

The transmission module 650 is configured to write the CC-ALF parameter into a coded video bitstream as video bitstream parameter information and transmit the coded video bitstream to a decoding end.

In an embodiment, after the luma component of the reconstructed picture is filtered to obtain the corresponding reconstructed luma-component value, the video processing apparatus applied to the encoding end further includes a classification module.

The classification module is configured to classify the reconstructed luma-component value by using a preconfigured luma-component sample classification strategy to obtain a classified reconstructed luma-component value.

In an embodiment, filtering the luma component of the reconstructed picture to obtain the corresponding reconstructed luma-component value includes:
performing one or more filterings on the luma component of the reconstructed picture according to a preset order to obtain the corresponding reconstructed luma-component value, where the filtering processing process includes at least one of:
deblocking filtering processing;
bilateral filtering processing;
pixel adaptive offset processing;
filtering processing using a single fixed filter; or
filtering processing using at least two cascaded fixed filters.

In an embodiment, the luma-component sample classification strategy includes at least one of: an ALF filtering processing mode-based classification strategy, an improved ALF filtering processing mode-based classification strategy, a basic sample residual-based classification strategy, or a region partition-based classification strategy.

In an embodiment, after the luma component of the reconstructed picture is filtered to obtain the corresponding reconstructed luma-component value, the video processing apparatus applied to the encoding end further includes a third filtering module.

The third filtering module is configured to perform an ALF filtering operation separately on a first chroma component and a second chroma component in the reconstructed picture to obtain the corresponding first reconstructed chroma-component value and the corresponding second reconstructed chroma-component value.

In an embodiment, the video bitstream parameter information includes at least one of: a CC-ALF enable flag in a sequence parameter set (SPS), a CC-ALF enable flag in a picture parameter set (PPS), a CC-ALF enable flag and a CC-ALF identifier in a picture header (PH), a CC-ALF enable flag and a CC-ALF identifier in a slice header (SH), a filter identifier in a coding tree unit (CTU), or CC-ALF parameter information in an adaptation parameter set (APS).

The CC-ALF parameter information in the APS includes at least the following parameters: the number of CC-ALF coefficients, absolute values of the CC-ALF coefficients, and signs of the CC-ALF coefficients.

In an embodiment, the video bitstream parameter information further includes at least one of:
an input sample category identifier or index that is used for CC-ALF filtering and is included in the sequence parameter set, the picture parameter set, the picture header, the slice header, or the coding tree unit; or
a chroma-component CC-ALF input sample category identifier or index that is included in the adaptation parameter set.

In an embodiment, the CC-ALF parameter information in the adaptation parameter set corresponds to the first chroma component and the second chroma component.

The video processing apparatus provided in this embodiment is configured to perform the video processing method applied to the encoding end according to the embodiment shown in FIG. 7. The implementation principles and technical effects of the video processing apparatus provided in this embodiment are similar to those of the video processing method and thus are not repeated herein.

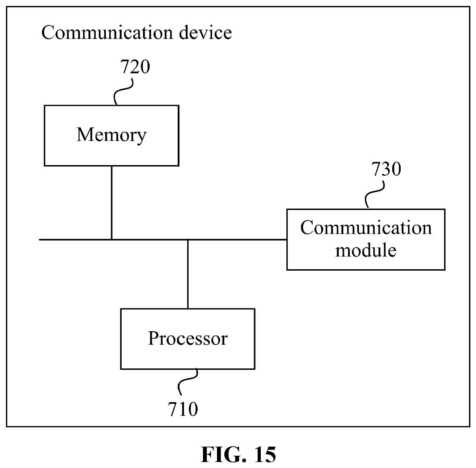

In an embodiment, FIG. 15 is a structural diagram of a communication device according to an embodiment of the present application. As shown in FIG. 15, the device provided in the present application includes a processor 710, a memory 720, and a communication module 730. One or more processors 710 may be provided in the device. One processor 710 is shown as an example in FIG. 15. One or more memories 720 may be provided in the device. One memory 720 is shown as an example in FIG. 15. The processor 710, the memory 720 and the communication module 730 in the device may be connected via a bus or in other manners. FIG. 15 shows the connection via a bus as an example. In this embodiment, the device may be a decoder or an encoder.

As a computer-readable storage medium, the memory 720 may be configured to store software programs and computer-executable programs and modules, such as program instructions/modules (for example, the first filter 510, the first determination module 520, the second filter 530, and the second determination module 540 in the video processing apparatus applied to the decoding end) corresponding to the device according to any embodiment of the present application. The memory 720 may include a program storage region and a data storage region, where the program storage region may store an operating system and an application program required by at least one function, and the data storage region may store data created depending on the use of the device. Additionally, the memory 720 may include a high-speed random-access memory and may further include a non-volatile memory such as at least one magnetic disk memory, a flash memory, or another non-volatile solid-state memory. In some examples, the memory 720 may further include memories remotely disposed relative to the processor 710, and these remote memories may be connected to the device via a network. Examples of the network include, but are not limited to, the Internet, an intranet, a local area network, a mobile communication network, and a combination thereof.

In the case where the communication device is the decoding end, the preceding device may be configured to perform the video processing method applied to the decoding end according to any preceding embodiment and has corresponding functions and effects.

In the case where the communication device is the encoding end, the preceding device may be configured to perform the video processing method applied to the encoding end according to any preceding embodiment and has corresponding functions and effects.

An embodiment of the present application provides a storage medium storing computer-executable instructions, where the computer-executable instructions, when executed by a computer processor, cause the computer processor to perform the video processing method applied to a decoding end. The method includes: filtering a luma component of a reconstructed picture to obtain a corresponding reconstructed luma-component value; determining a luma-component filtering mode and a luma-component filtering parameter according to video bitstream parameter information; filtering the reconstructed luma-component value by using the luma-component filtering mode and the luma-component filtering parameter to obtain a corresponding first chroma-component sample correction value and a corresponding second chroma-component sample correction value; and superimposing the first chroma-component sample correction value with a first reconstructed chroma-component value to obtain a corrected first reconstructed chroma-component value, and superimposing the second chroma-component sample correction value with a second reconstructed chroma-component value to obtain a corrected second reconstructed chroma-component value.

An embodiment of the present application provides a storage medium storing computer-executable instructions, where the computer-executable instructions, when executed by a computer processor, cause the computer processor to perform the video processing method applied to an encoding end. The method includes: filtering a luma component of a reconstructed picture to obtain a corresponding reconstructed luma-component value; filtering the reconstructed luma-component value to obtain a corresponding first chroma-component sample correction value and a corresponding second chroma-component sample correction value; superimposing the first chroma-component sample correction value with a first reconstructed chroma-component value to obtain a corrected first reconstructed chroma-component value, and superimposing the second chroma-component sample correction value with a second reconstructed chroma-component value to obtain a corrected second reconstructed chroma-component value; determining a CC-ALF parameter based on a principle of minimizing a minimum mean square error between a corrected reconstructed chroma-component value and an original chroma-component pixel value; and writing the CC-ALF parameter into a coded video bitstream as video bitstream parameter information and transmitting the coded video bitstream to a decoding end.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, multiple embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory apparatus and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

An embodiment of the present application provides a computer program product. The computer program product includes a computer program which, when executed by a processor, causes the processor to perform the video processing method according to any embodiment of the present application.

The computer program product may be implemented using computer program codes written in one or more programming languages or a combination thereof, for performing the operations of the present application. The programming languages include object-oriented programming languages, such as Java, Smalltalk, and C++, as well as conventional procedural programming languages, such as the "C" programming language or similar programming languages. Program codes may be executed entirely on a user computer, executed partly on a user computer, executed as a standalone software package, executed partly on a user computer and partly on a remote computer, or executed entirely on a remote computer or a server. In the case relating to a remote computer, the remote computer may be connected to a user computer via any kind of network including a local area network (LAN) or a wide area network (WAN), or may be connected to an external computer (for example, via the Internet through an Internet service provider).

Preferred embodiments of the present application are described above, which are not intended to limit the present application. Those skilled in the art may make various modifications and variations to the present application. Any modifications, equivalent substitutions, and improvements made within the spirit and principle of the present application are within the scope of the present application.

## Claims

1. A video processing method, the method being applied to a decoding end and comprising:
filtering a luma component of a reconstructed picture to obtain a corresponding reconstructed luma-component value;
determining a luma-component filtering mode and a luma-component filtering parameter according to video bitstream parameter information;
filtering the reconstructed luma-component value by using the luma-component filtering mode and the luma-component filtering parameter to obtain a corresponding first chroma-component sample correction value and a corresponding second chroma-component sample correction value; and
superimposing the first chroma-component sample correction value with a first reconstructed chroma-component value to obtain a corrected first reconstructed chroma-component value, and superimposing the second chroma-component sample correction value with a second reconstructed chroma-component value to obtain a corrected second reconstructed chroma-component value.

2. The video processing method according to claim 1, before filtering the luma component of the reconstructed picture to obtain the corresponding reconstructed luma-component value, further comprising:
parsing a received coded video bitstream to obtain the corresponding video bitstream parameter information; and
decoding the coded video bitstream to obtain the corresponding reconstructed picture.

3. The video processing method according to claim 1, after filtering the luma component of the reconstructed picture to obtain the corresponding reconstructed luma-component value, further comprising:
performing an adaptive loop filter, ALF, filtering operation separately on a first chroma component and a second chroma component in the reconstructed picture to obtain the corresponding first reconstructed chroma-component value and the corresponding second reconstructed chroma-component value.

4. The video processing method according to claim 1, before filtering the reconstructed luma-component value by using the luma-component filtering mode and the luma-component filtering parameter, further comprising:
classifying the reconstructed luma-component value by using a preconfigured luma-component sample classification strategy to obtain a classified reconstructed luma-component value.

5. The video processing method according to claim 1, wherein filtering the reconstructed luma-component value by using the luma-component filtering mode and the luma-component filtering parameter comprises:
filtering a reconstructed luma-component value of each category, wherein different luma-component filtering parameters and different luma-component filtering modes are used for filtering reconstructed luma-component values of different categories.

6. The video processing method according to claim 4, wherein the luma-component sample classification strategy comprises at least one of: an ALF filtering processing mode-based classification strategy, an improved ALF filtering processing mode-based classification strategy, a basic sample residual-based classification strategy, or a region partition-based classification strategy.

7. The video processing method according to any one of claims 1 to 6, wherein filtering the luma component of the reconstructed picture to obtain the corresponding reconstructed luma-component value comprises:
performing at least one filtering on the luma component of the reconstructed picture according to a preset order to obtain the corresponding reconstructed luma-component value, wherein a filtering processing process comprises at least one of:
deblocking filtering processing;
bilateral filtering processing;
pixel adaptive offset processing;
filtering processing using a single fixed filter; or
filtering processing using at least two cascaded fixed filters.

8. The video processing method according to any one of claims 1 to 6, wherein filtering the luma component of the reconstructed picture to obtain the corresponding reconstructed luma-component value comprises:
filtering the luma component of the reconstructed picture to obtain at least one reconstructed luma-component value.

9. The video processing method according to any one of claims 1 to 6, wherein the video bitstream parameter information comprises at least one of: a cross-component adaptive loop filter, CC-ALF, enable flag in a sequence parameter set, SPS, a CC-ALF enable flag in a picture parameter set, PPS, a CC-ALF enable flag and a CC-ALF identifier in a picture header, PH, a CC-ALF enable flag and a CC-ALF identifier in a slice header, SH, a filter identifier in a coding tree unit, CTU, or CC-ALF parameter information in an adaptation parameter set, APS, wherein the CC-ALF parameter information in the APS comprises at least following parameters: a number of CC-ALF coefficients, absolute values of the CC-ALF coefficients, and signs of the CC-ALF coefficients.

10. The video processing method according to claim 9, wherein the video bitstream parameter information further comprises at least one of:
an input sample category identifier or index that is used for CC-ALF filtering and is comprised in a sequence parameter set, a picture parameter set, a picture header, a slice header, or a coding tree unit; or
a chroma-component CC-ALF input sample category identifier or index that is comprised in an adaptation parameter set.

11. The video processing method according to claim 9, wherein the CC-ALF parameter information in the adaptation parameter set corresponds to a first chroma component and a second chroma component.

12. The video processing method according to claim 1, wherein filtering the reconstructed luma-component value by using the luma-component filtering mode and the luma-component filtering parameter comprises:
filtering the reconstructed luma-component value according to a preset luma-component filtering mode and the luma-component filtering parameter; or
filtering the reconstructed luma-component value according to a luma-component filtering mode specified by the video bitstream parameter information and the luma-component filtering parameter.

13. The video processing method according to claim 12, wherein filtering the reconstructed luma-component value according to the preset luma-component filtering mode and the luma-component filtering parameter comprises:
determining, according to a CC-ALF enable flag, to perform CC-ALF filtering processing on a luma component of a current picture; and
determining a CC-ALF coefficient and filtering the reconstructed luma-component value according to the preset luma-component filtering mode.

14. The video processing method according to claim 12, wherein filtering the reconstructed luma-component value according to the luma-component filtering mode specified by the video bitstream parameter information and the luma-component filtering parameter comprises:
determining, according to a CC-ALF enable flag, to perform CC-ALF filtering processing on a luma component of a current picture;
determining, according to an input sample category identifier or index that is used for CC-ALF filtering, a number of reconstructed luma-component values used for the CC-ALF filtering and types of the reconstructed luma-component values; and
determining a CC-ALF coefficient and filtering the reconstructed luma-component values.

15. A video processing method, the method being applied to an encoding end and comprising:
filtering a luma component of a reconstructed picture to obtain a corresponding reconstructed luma-component value;
filtering the reconstructed luma-component value to obtain a corresponding first chroma-component sample correction value and a corresponding second chroma-component sample correction value;
superimposing the first chroma-component sample correction value with a first reconstructed chroma-component value to obtain a corrected first reconstructed chroma-component value, and superimposing the second chroma-component sample correction value with a second reconstructed chroma-component value to obtain a corrected second reconstructed chroma-component value;
determining a cross-component adaptive loop filter, CC-ALF, parameter based on a principle of minimizing a minimum mean square error between a corrected reconstructed chroma-component value and an original chroma-component pixel value; and
writing the CC-ALF parameter into a coded video bitstream as video bitstream parameter information, and transmitting the coded video bitstream to a decoding end.

16. The video processing method according to claim 15, after filtering the luma component of the reconstructed picture to obtain the corresponding reconstructed luma-component value, further comprising:
classifying the reconstructed luma-component value by using a preconfigured luma-component sample classification strategy to obtain a classified reconstructed luma-component value.

17. The video processing method according to any one of claims 15 and 16, wherein filtering the luma component of the reconstructed picture to obtain the corresponding reconstructed luma-component value comprises:
performing at least one filtering on the luma component of the reconstructed picture according to a preset order to obtain the corresponding reconstructed luma-component value, wherein a filtering processing process comprises at least one of:
deblocking filtering processing;
bilateral filtering processing;
pixel adaptive offset processing;
filtering processing using a single fixed filter; or
filtering processing using at least two cascaded fixed filters.

18. The video processing method according to claim 16, wherein the luma-component sample classification strategy comprises at least one of: an adaptive loop filter, ALF, filtering processing mode-based classification strategy, an improved ALF filtering processing mode-based classification strategy, a basic sample residual-based classification strategy, or a region partition-based classification strategy.

19. The video processing method according to claim 15, after filtering the luma component of the reconstructed picture to obtain the corresponding reconstructed luma-component value, further comprising:
performing an ALF filtering operation separately on a first chroma component and a second chroma component in the reconstructed picture to obtain the corresponding first reconstructed chroma-component value and the corresponding second reconstructed chroma-component value.

20. The video processing method according to claim 15, wherein the video bitstream parameter information comprises at least one of: a CC-ALF enable flag in a sequence parameter set, SPS, a CC-ALF enable flag in a picture parameter set, PPS, a CC-ALF enable flag and a CC-ALF identifier in a picture header, PH, a CC-ALF enable flag and a CC-ALF identifier in a slice header, SH, a filter identifier in a coding tree unit, CTU, or CC-ALF parameter information in an adaptation parameter set, APS,
wherein the CC-ALF parameter information in the APS comprises at least following parameters: a number of CC-ALF coefficients, absolute values of the CC-ALF coefficients, and signs of the CC-ALF coefficients.

21. The video processing method according to claim 20, wherein the video bitstream parameter information further comprises at least one of:
an input sample category identifier or index that is used for CC-ALF filtering and is comprised in a sequence parameter set, a picture parameter set, a picture header, a slice header, or a coding tree unit; or
a chroma-component CC-ALF input sample category identifier or index that is comprised in an adaptation parameter set.

22. The video processing method according to claim 20, wherein the CC-ALF parameter information in the adaptation parameter set corresponds to a first chroma component and a second chroma component.

23. A communication device, comprising a memory and at least one processor, wherein
the memory is configured to store at least one program; and
the at least one program, when executed by the at least one processor, causes the at least one processor to perform the method according to any one of claims 1 to 22.

24. A storage medium storing a computer program which, when executed by a processor, causes the processor to perform the method according to any one of claims 1 to 22.
